# EUROPEAN PATENT SPECIFICATION

(11) **EP 4 509 372 B1**
(45) Date of publication and mention of the grant of the patent: **18.11.2026**
(21) Application number: 24190952.2
(22) Date of filing: 25.07.2024
(51) Int. Cl.: B60S 1/34, B60S 1/18, B60S 1/16, H02K 7/06

(54) **MECHANICAL HARD STOP FOR WIPER**
MECHANISCHER FESTANSCHLAG FÜR SCHEIBENWISCHER
BUTÉE MÉCANIQUE POUR ESSUIE-GLACE

(30) Priority: 25.07.2023 IN 202341050065; 04.06.2024 US 202418733540
(43) Date of publication of application: 19.02.2025
(73) Proprietor: ROSEMOUNT AEROSPACE INC., Burnsville, MN 55306-4898 (US)
(72) Inventor: NOUDURI, Phani Srinivas, 530066 Bangalore (IN); VENKATARAMU, Raghavendra, 560086 Bangalore (IN)
(74) Representative: Dehns

(56) References cited:
- EP-B1- 1 242 269
- DE-A1- 10 343 168
- US-A1- 2018 186 338
- US-A1- 2021 170 993

## Description

### TECHNICAL FIELD

The present disclosure relates to wiper systems and more particularly to mechanical hard stops for wiper systems.

### BACKGROUND

Typically windshield wiper systems are integrated with a wiper arm and blade on the windshield. When the wiper system is energized, it wipes the windshield where the wiper arm rotates back and forth in an arc. Current windshield wiper systems may utilize a crank rocker mechanism where the continuous rotation of the motor is converted to oscillatory motion at the output shaft. In this configuration, the system can include a reversible motor where the sweep angle is fixed in computer logic (e.g., a predetermined number of shaft rotations). However, presently, certain reversible motor systems may not include a safety feature to prevent arm assembly over-sweep beyond the fixed sweep angle, which can cause damage to the airframe or fracture of external wiper system components.

The conventional techniques have been considered satisfactory for their intended purpose. However, there is an ever present need for improved systems and methods for improved safety means to prevent or mitigate over sweep. This disclosure provides a solution for this need.

US 2021/170993 A1 relates to a reversible motor configured with motion stops for aircraft windshield wiper system.

### SUMMARY

In accordance with an aspect of this disclosure, there is provided a system as recited in claim 1.

The end cap can allow for axial movement of the nut along the end cap as the wiper drive shaft rotates. A bearing can be disposed on the wiper drive shaft forward of the nut configured to facilitate rotation of the wiper draft shaft.

A first circlip can be disposed in the first hard stop groove and a second circlip can be disposed in the second hard stop groove. The first and second circlips can be configured to prevent axial movement of the nut along the wiper drive shaft beyond the first and second circlips to prevent the wiper drive shaft from rotating beyond the start position and the end sweep position. In certain embodiments, the first and second circlips can extend radially beyond an outer diameter of the wiper drive shaft to physically block or prevent movement of the nut past the first and second hard stop positions.

A motor can be operatively connected to the wiper drive shaft configured to drive the wiper drive shaft to oscillate between the start position and the end sweep position. A controller can be operatively connected to the motor configured to control the motor and the controller can include an overcurrent module configured to sense an overcurrent condition in the motor and to shut down the motor when an overcurrent condition is detected.

In embodiments, the wiper drive shaft does not translate axially relative to the end cap such that a distance between a distal end of the wiper drive shaft and the end cap does not change as the wiper drive shaft rotates and as the nut moves axially relative to the end cap and the wiper drive shaft. In this way, the circlips are what prevent movement of the nut beyond the hard stop positions, and not the wiper drive shaft reaching the end of the end cap, for example.

In embodiments, because the first and second circlips physically block the movement of the nut past the first and second circlips, the wiper drive shaft will continue to try to rotate and trigger an overcurrent condition in the motor when the nut contacts either the first or second circlip. The controller and the overcurrent module can thus be configured to cause the motor to shut down when the overcurrent condition is detected to prevent over sweep of the wiper arm beyond the start position or the end sweep position.

In embodiments, the controller can be configured to stop movement of the wiper arm and shut down the motor when the overcurrent condition is detected irrespective of whether a predetermined number of motor shaft revolutions or wiper drive shaft revolutions have occurred as defined in controller instructions based on a coded wiper arm program.

In embodiments, the system can include the wiper arm operatively connected to a proximal end of the wiper drive shaft configured to wipe a windshield of a vehicle between the start position and the end sweep position to provide a viewing portion of the windshield in a defined sweep zone (e.g., as determined by the sweep angle of the wiper drive shaft threads). In embodiments, the system can include the vehicle having the windshield and the wiper arm mounted to the vehicle. In certain embodiments, the vehicle can be an aircraft and the windshield can be a cockpit windshield such that the viewing portion of the windshield is a pilot viewing portion and/or a co-pilot viewing portion. In embodiments, the sweep angle and sweep zone can be determined based on a particular aircraft configuration and/or regulatory requirements.

In accordance with another aspect of this disclosure, there is provided a non-transitory computer readable medium as recited in claim 12.

In embodiments, controlling movement of the wiper arm can include stopping movement of the wiper arm when the nut interacts with the first or second mechanical hard stop irrespective of whether the predetermined number of motor shaft or wiper drive shaft revolutions have occurred.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, other embodiments thereof will be described in detail herein below with reference to certain figures, wherein:
Fig. 1 is a schematic diagram of an embodiment of a system in accordance with this disclosure, showing a windshield having an embodiment of a windshield wiper system;
Fig. 2 is a schematic diagram of an embodiment of a windshield wiper system;
Fig. 3A is a top perspective view of a portion of an embodiment of another windshield wiper system;
Fig. 3B is a partial cross-sectional perspective view of the windshield wiper system of Fig. 3A;
Fig. 4 is an enlarged partial cross-sectional view of the windshield wiper system of Fig. 3A, showing a distal end of an embodiment of a wiper drive shaft enclosed in an end cap and a nut threaded on the wiper drive shaft;
Fig. 5A is a perspective view of the wiper drive shaft of Fig. 4;
Fig. 5B is an enlarged partial view of the distal end of the wiper drive shaft of Fig. 5A;
Fig. 6 is a perspective view of an embodiment of the nut of Fig. 4;
Fig. 7 is a cross sectional view of an embodiment of the end cap of Fig. 4; and
Fig. 8 is a perspective view of the end cap of Fig. 7.

### DETAILED DESCRIPTION

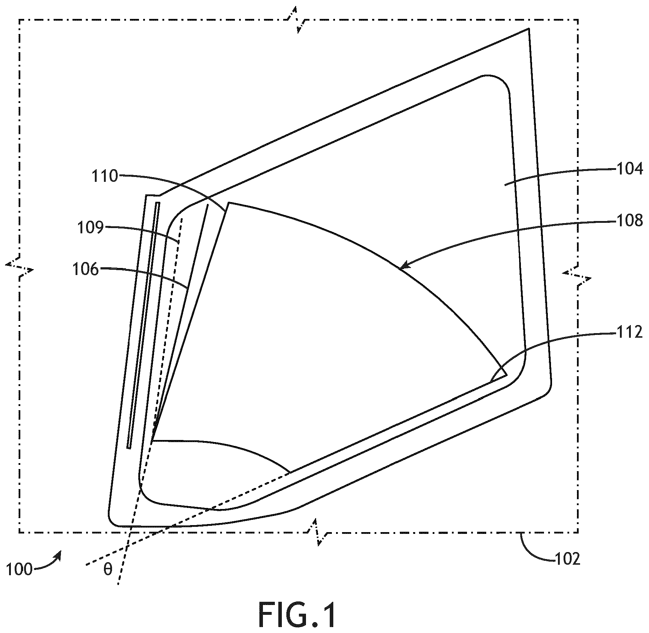

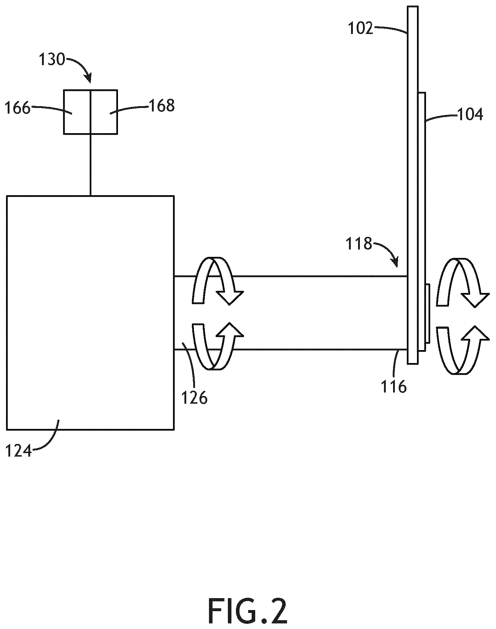

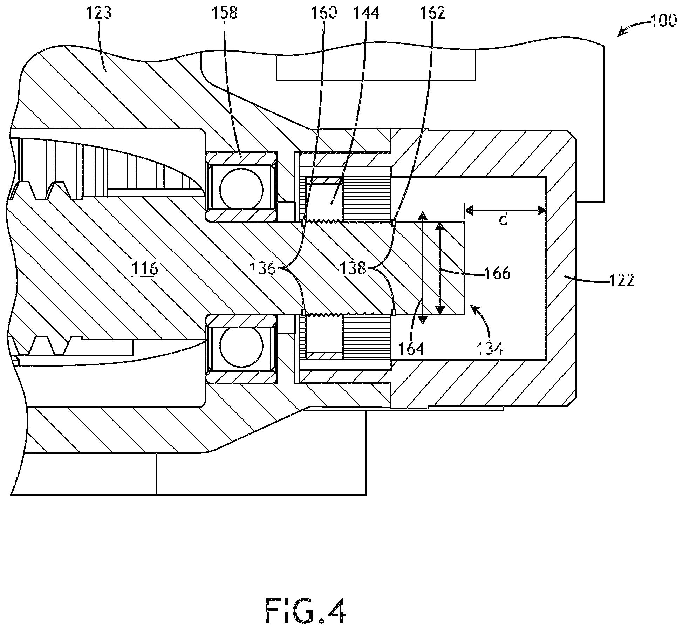

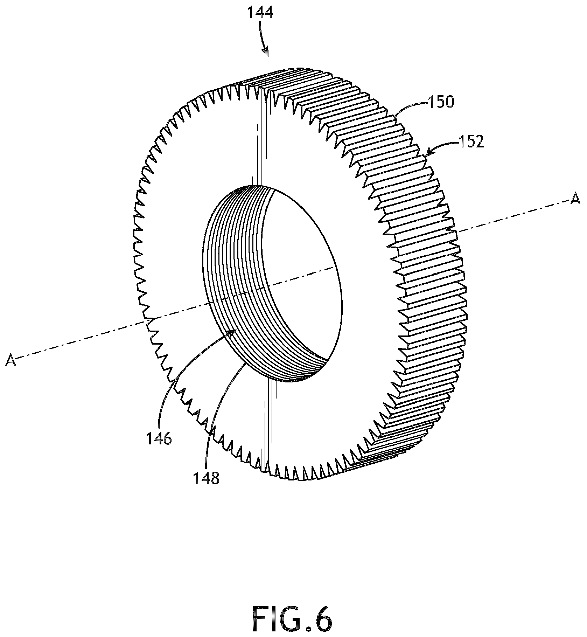

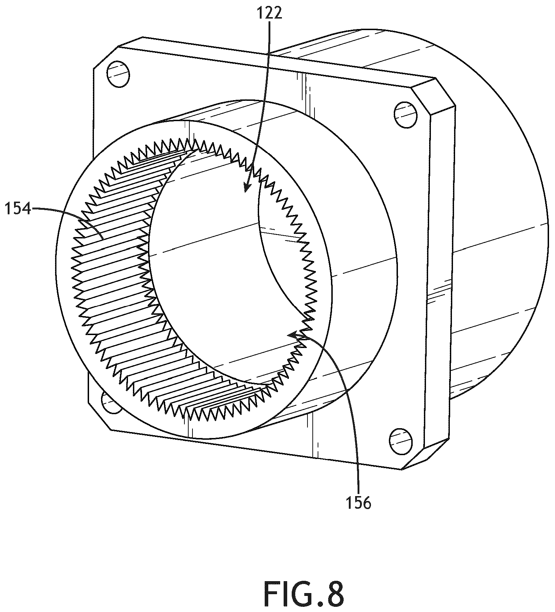

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-8.

Embodiments of wiper systems, e.g., as disclosed herein, can include hardcoded software which instruct a motor to drive a certain number of revolutions in one direction, to move the wiper arm from a starting position to an end sweep position, before reversing the motor for the same number of revolutions in the opposite direction to move the wiper arm back from the end sweep position to the starting position to complete a sweep. In the event the wiper arm over sweeps the windshield, systems for controlling the system (e.g., to shut down) are needed. In accordance with at least one aspect of this disclosure, a system 100 is described to mitigate overs weep events.

Referring to Fig. 1, the system 100 can include a vehicle 102 having a windshield 104 and a at least one wiper arm 106 mounted to the vehicle 102 configured to wipe the windshield 104 along a sweep zone 108 defined between a start position 110 and an end sweep position 112. In certain embodiments, the vehicle 102 can include an aircraft having a cockpit windshield, and the desired user viewing portion 114 can be a viewing portion based on a pilot or co-pilot view for a given aircraft or as required by regulation for a given aircraft.

With reference now to Figs, 1-3A, a wiper drive shaft 116 (e.g., a worm shaft) can be operatively connected to the wiper arm 106 at a proximal end 118 of the wiper drive shaft 116 to drive the wiper arm 106 between the start position 110 and the end sweep position 112. A distal end 120 of the wiper arm drive shaft 116 can extend into an end cap 122, which can operatively connect to a wiper drive shaft housing 123 (e.g., a gear box assembly and motor converter housing).

A motor 124 having a motor drive shaft 126 can be operatively connected to the wiper drive shaft 116 to drive the wiper arm 106 (e.g., oscillate) via the wiper drive shaft 116. In embodiments the motor 124 can be a bidirectional electric motor and can be a brushless DC motor. In certain embodiments, the system 100 can include a gear reducer so that a predetermined number of revolutions of the motor drive shaft 126 moves the wiper arm 106 between the start position 110 and the end sweep position 112, such as shown in Fig. 1.

A controller 130 can be operatively connected to the motor 124. The controller 130 can be configured control movement of the wiper arm 106 to prevent the wiper arm 106 from sweeping beyond the start position 110 and the end sweep position 112 during operation of the wiper arm 106 based at least in part on the wiper arm position data. For example, the controller 130 can keep the wiper arm within a predetermined minimum or nominal sweep limits, such as shown in Fig. 1. Ideally, the predetermined number of motor drive shaft revolutions will keep the wiper arm 106 within these defined limits, however, this may not always be the case due to changing environmental conditions (e.g., aerodynamic loading or high-friction dry glass conditions), for example, which can affect gear reducer backlash and/or affect the relationship between motor revolutions and arm position. Thus, the controller 130 can use can use feedback from the motor, along with the system described herein below to keep the wiper arm 106 within the prescribed sweep limits, regardless of the whether the predetermined motor drive shaft revolutions are met, as described below.

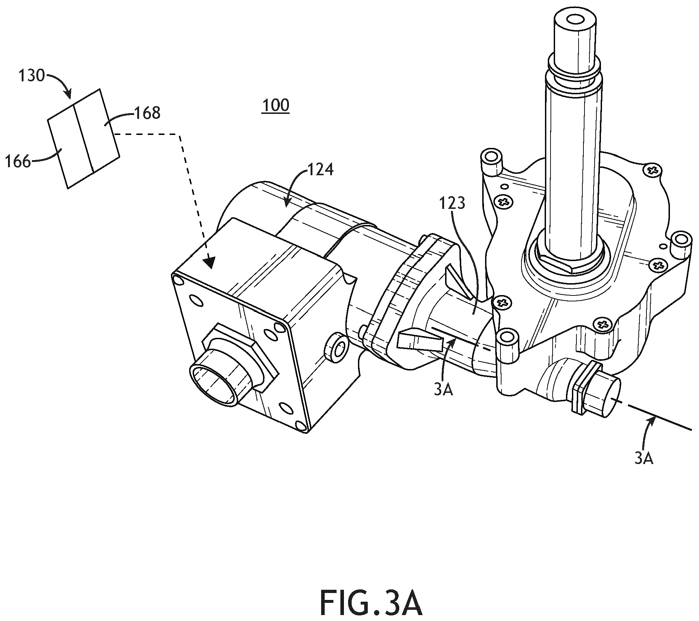

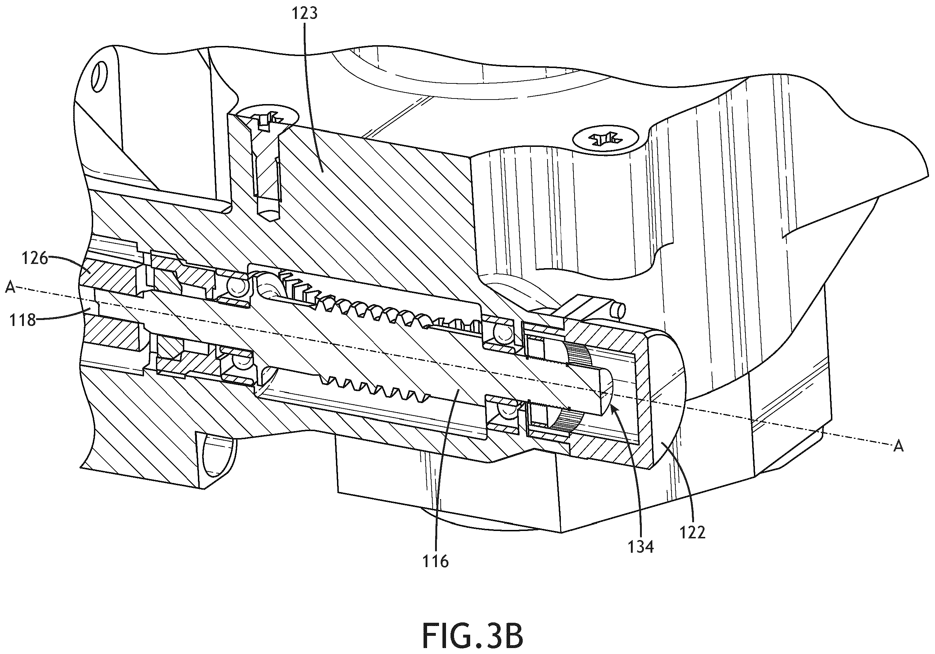

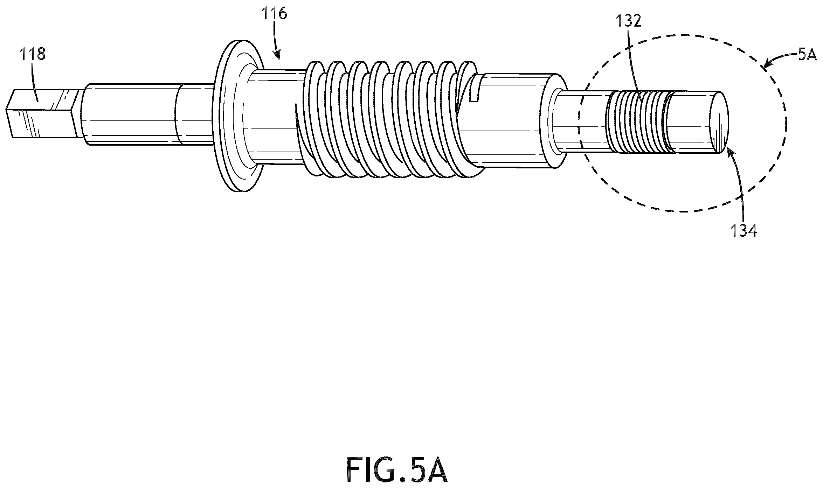

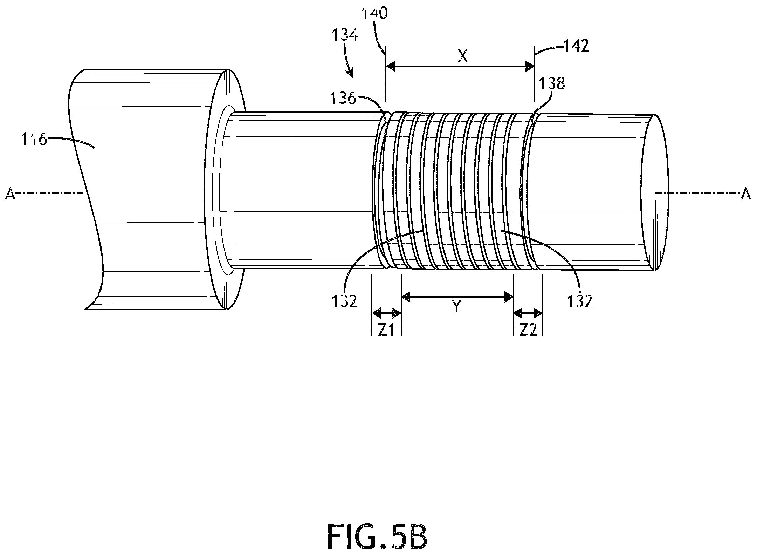

In accordance with at least one aspect of this disclosure, with reference now to Figs. 3-8, the system 100 includes the wiper drive shaft 116 configured to drive the wiper arm 106 between the start position 110 and an end sweep position 112. The wiper drive shaft 116 includes external threads 132 defined therein and at a distal end 134 thereof bound by two unthreaded portions. An axial length Y of the external threads 132 along the wiper drive shaft 116 defines the desired rotational bounds of the wiper drive shaft 116 between the start position 110 and the end sweep position 112, which translates to a total desired sweep angle θ between the start position 110 and end sweep position 112 (e.g., as shown on the windshield in Fig. 1). The wiper drive shaft includes and a first hard stop groove 136 and a second hard stop groove 138, each defined at a respective first axial offset Z1 and a second axial offset Z2 from the external threads to define a first hard stop position 140 and second hard stop position 142 to define the true rotational bounds of the of the wiper drive shaft 116. As shown in Fig. 5A, the axial length Y of the external threads 132 is less than the axial length X, which includes the axial length Y plus the first and second axial offsets Z1 and Z2.

A nut 144 is threaded on the distal end 134 of the wiper drive shaft 116 and configured to travel axially (e.g., along axis A) along the wiper drive shaft 116 during rotation of the wiper drive shaft 116 within the nut 144. The first and second hard stop positions 140, 142 define can define the axial bounds of the nut 144 such that the nut travels axial along the wiper drive shaft between the first and second hard stop positions 140, 142. The nut 144 can include internal threads 146 defined on an inner diameter 148 thereof configured to mate with the external threads 132 of the wiper drive shaft 116. The nut 144 can include external splines 150 defined on an outer diameter 152 thereof.

The end cap is included and configured to enclose at least the distal end 134 of the wiper drive shaft 116. The end cap 122 can include internal splines 154 defined on an inner diameter 156 thereof configured to mate with the external splines 150 defined on the nut 144 to prevent rotation of the nut 144 relative to the wiper drive shaft 116 and the end cap 122, but still allow for axial movement of the nut 144 along the end cap 122 as the wiper drive shaft 116 rotates. A bearing 158 can be disposed on the wiper drive shaft 116 forward of the nut 144 and the end cap 122 (e.g., the bearing 158 can be disposed in the wiper drive shaft housing 123 configured to facilitate rotation of the wiper draft shaft 116.

A first circlip 160 can be disposed in the first hard stop groove 136 and a second circlip 162 can be disposed in the second hard stop groove 138. The first and second circlips 160, 162 can be configured to prevent axial movement of the nut 144 along the wiper drive shaft 116 beyond the first and second circlips 160, 162 to prevent the wiper drive shaft 116 from rotating beyond the first and second hard stop positions 140, 142, which will prevent the wiper arm 106 from sweeping beyond the start position 110 and the end sweep position 112. In certain embodiments, the first and second circlips 160, 162 can extend to an outer diameter 164 radially beyond an outer diameter 164 of the wiper drive shaft 116 to physically block or prevent movement of the nut 144 past the first and second hard stop positions 140, 142.

In embodiments, the wiper drive shaft 116 does not translate axially relative to the end cap 122 such that a distance d between the distal end 134 of the wiper drive shaft 116 and the end cap 122 does not change as the wiper drive shaft 116 rotates and as the nut 144 moves axially relative to the end cap 122 and the wiper drive shaft 116. In this way, the circlips 160, 162 are what prevent movement of the nut 144 beyond the hard stop positions 140, 142 and shut down of the motor 124 (as discussed below), and not the wiper drive shaft 116 reaching the end of the end cap 122, for example.

Referring again to Fig. 3, the controller 130 can be operatively connected to the motor 124 configured to control the motor 124 and the controller 130 can include an overcurrent module 166 configured to sense an overcurrent condition in the motor 124 and to shut down the motor 124 when an overcurrent condition is detected. In embodiments, because the first and second circlips 160, 162 physically block the movement of the nut 144 past the first and second circlips 160, 162, the wiper drive shaft 116 will continue to try to rotate and trigger the overcurrent condition in the motor 124 when the nut 144 contacts either the first or second circlip 160, 162. The controller 130 and the overcurrent module 166 can thus be configured to cause the motor 124 to shut down when the overcurrent condition is detected to prevent over sweep of the wiper arm 106 beyond the start position 110 or the end sweep position 112.

In embodiments, the controller 130 can be configured to stop movement of the wiper arm 106 and shut down the motor 124 when the overcurrent condition is detected irrespective of whether a predetermined number of motor shaft 126 revolutions have occurred as defined in controller instructions based on a coded wiper arm program stored in a memory 168.

In accordance with at least one aspect of this disclosure, a non-transitory computer readable medium can have computer executable instructions stored therein, and the computer executable instructions can be configured to cause a computer to perform a method. In embodiments, the method can include controlling movement of a wiper arm (e.g., wiper arm 106) based at least in part on a position of a nut (e.g., nut 144) along external threads of a wiper drive shaft (e.g., wiper drive shaft 116) and between a first and second mechanical hard stop (e.g., circlips 160, 162) disposed on the wiper drive shaft such that total displacement of the wiper arm is confined to a predetermined sweep zone (e.g., sweep zone 108) defined by the first and second mechanical hard stops and an axial length of the external threads (e.g., axial length Y plus axial offsets Z1 and Z2).

In embodiments, the controller 130 can include a memory (e.g., memory 168), the memory configured to store a predefined coded wiper arm program and the controller 130 can include the non-transitory computer readable medium. The predefined program can be configured to control the motor to rotate the wiper drive shaft a predetermined number of motor shaft revolutions or wiper shaft revolutions to complete a sweep (e.g., along the external threads on the wiper drive shaft). In embodiments, controlling movement of the wiper arm can include stopping movement of the wiper arm when the nut interacts with the first or second mechanical hard stop irrespective of whether the predetermined number of motor shaft or wiper shaft revolutions have occurred.

In certain embodiments, the mechanical hard stops include a first circlip (e.g., clip 160) and a second circlip (e.g., clip 162) disposed on the wiper drive shaft each the respective first and second axial offsets Z1 and Z2 from the external threads defining the sweep zone, The first and second circlips can be configured to trigger an overcurrent condition of a motor (e.g., motor 124) driving the wiper drive shaft. In certain such embodiments, controlling the motor can include, shutting down the motor when the overcurrent condition is detected irrespective of whether the predetermined number of motor shaft or wiper shaft revolutions have occurred when the overcurrent condition is detected.

Embodiments of the windshield wiper system disclosed herein can implement a reversible brushless DC motor through electronic control of the motor (e.g., using controller 130) to achieve oscillatory motion at the wiper output shaft after gear reduction. The sweep limits (e.g., sweep zone 108 shown in Fig. 1) and park position 109 can be controlled by software code to control the angular limits of the wiper drive shaft rotation. In other words, the wiper drive shaft rotational angle/position is controlled for achieving the prescribed sweep area 108 and parking position 109 on the wind shield.

Embodiments described herein provides for a mechanical hard stop on the wiper drive shaft to control and prevent the over sweeping of externals, which if left unmitigated may cause damage to the airframe or the wiper externals.

To mechanically stop the wiper system, in embodiments, the rear end 134 of the wiper drive shaft 116 can be assembled onto a translating nut 144 and the nut can be restricted at both ends by circlips 160, 162. The rotation of wiper drive shaft 116 is converted to translation of the nut 144 and the circlips 160, 162 are placed on the wiper drive shaft 116 as stoppers on either ends of the axial length X as shown in Fig. 5A. The translating nut 144 is provided with external splines 150 and the end cap 122 is provided with internal splines 154. These mating splines 150, 154 will restrict the rotation of nut 144 and enables smooth axial translation of the nut 144 along the wiper drive shaft 116. In the case of normal operation of motor reversal (e.g., when the motor 124 is driving the wiper arm 106 to oscillate between the start and end sweep positions), the nut 144 translates between the two circlips 160, 162 placed on the wiper drive shaft 116. In case of over sweep of externals on either side (e.g., if the wiper arm tries to sweep past the start or end sweep positions), the translating nut 144 will touches the respective circlip 160, 162 and restrict further rotation of wiper drive shaft 116, causing a locked rotor condition on the motor 124. This will cause a raise in current consumption which activates the over current trip logic 166 of motor and shuts down the motor 124. The whole setup is shown in Figure 1 below.

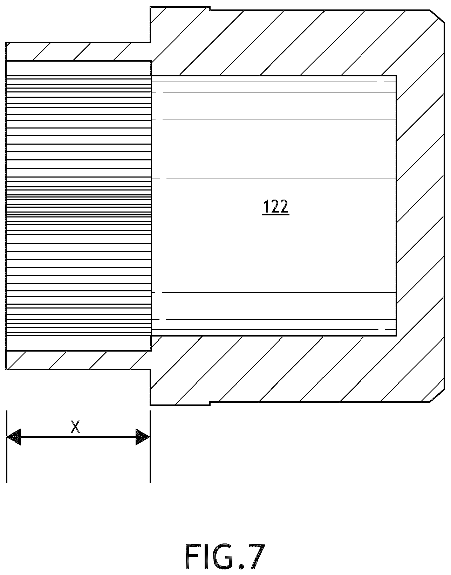

As shown in Fig. 5A, there are external threads 132 cut on the wiper drive shaft 116 in between the grooves 136, 138 along the length X as shown. The distance Y shown is the translating length of the nut 144 during normal operation of wiper motor. The distance Z on either side of the bounds of X is the additional axial offset length given to accommodate the over sweep of the wiper externals. As shown, the distance X= Y+2Z. The axial distances shown in Fig. 5A are for illustration and explanation only, and not limitation. Embodiments allow for precise placement of the grooves relative to the threads and determination of the translating distance of the nut 144 based on a particular application or desired sweep angle θ. The end cap 122 can be fabricated with internal splines up to length X as shown in Fig. 7, which matches the length X shown in Fig. 5A. The end cap 122 can also be provided with four mounting holes which can be used to fasten the end cap 122 onto the motor converter housing 123 and to enclose the hard stop assembly therein.

Embodiments provide a means for stopping torque of the motor using minimal force, which can make the hard stop assembly system more reliable. Embodiments of the hard stop assembly provide increased safety to the overall system 100 in the event of wiper externals over sweep and allows for precision control of over sweep. In event of hard stop failure or damage, only the circlips may need to be replaced and the rest of the hard stop assembly can be re-used without significant change or replacement. Embodiments allow for ease of assembly and maintenance because the hard stop assembly (e.g., the drive shaft 116, the end cap 122, the nut 144, and the circlips 160, 162) can be independent of the motor converter assembly.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "controller." A "circuit," "module," or "controller" can include one or more portions of one or more separate physical hardware and/or software components that can together perform the disclosed function of the "circuit," "module," or "controller", or a "circuit," "module," or "controller" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

## Claims

1. A system (100), comprising, a wiper drive shaft (116) configured to drive a wiper arm (106) between a start position (110) and an end sweep position (112), the wiper drive shaft (116) including external threads (132) therein and at a distal end (134) thereof, an axial length of the external threads (132) defining the start position (110) and the end sweep position (112) and a total sweep angle between the start position (110) and the end sweep position (112), **characterised in that**, the wiper drive shaft (116) includes a first hard stop groove (136) and a second hard stop groove (138), each defined at a respective first axial offset and a second axial offset from the external threads (132) to define a first hard stop position (140) and second hard stop position (142); a nut (144) threaded on the wiper drive shaft (116) and configured to travel axially along the wiper drive shaft (116) during rotation of the wiper drive shaft (116) within the nut (144), wherein the first and second hard stop positions (140, 142) define axial bounds of the nut (144) such that the nut (144) travels axial along the wiper drive shaft (116) between the first and second hard stop positions (140, 142); and an end cap (122) configured to enclose the distal end (134) of the wiper drive shaft (116), the end cap (122) including internal splines (154) defined on an inner diameter (156) thereof configured to mate with external splines (150) defined on an outer diameter (152) of the nut (144) to prevent rotation of the nut (144) relative to the wiper drive shaft (116) and the end cap (122).

2. The system (100) of claim 1, further comprising, a first circlip (160) disposed in the first hard stop groove (136) and a second circlip (162) disposed in the second hard stop groove (138), wherein the first and second circlips (160, 162) are configured to prevent axial movement of the nut (144) along the wiper drive shaft (116) beyond the first and second circlips (160, 162) to prevent the wiper drive shaft (116) from rotating beyond the start position (110) and the end sweep position (112).

3. The system (100) of claim 1 or 2, further comprising a motor (124) configured to drive the wiper drive shaft (116) to oscillate between the start position (110) and the end sweep position (112).

4. The system (100) of claim 3, further comprising a controller (130) configured to control the motor (124) and having an overcurrent module (166) operatively connected to the motor (124) configured to sense an overcurrent condition in the motor (124).

5. The system (100) of claim 4, wherein the first and second circlips (160, 162) are configured to trigger an overcurrent condition in the motor (124) when the nut (144) contacts either the first or second circlip (160, 162), wherein the overcurrent module (166) is configured to cause the motor (124) to shut down when the overcurrent is detected to prevent over sweep of the wiper arm (106) beyond the start position (110) or the end sweep position (112).

6. The system (100) of claim 5, wherein the controller (130) is configured to stop movement of the wiper arm (106) and shut down the motor (124) when the overcurrent condition is detected irrespective of whether a predetermined number of motor shaft (126) revolutions or wiper drive shaft revolutions have occurred as defined in controller instructions based on a coded wiper arm program.

7. The system (100) of any of claims 1 to 6, further comprising the wiper arm (106) operatively connected to a proximal end (118) of the wiper drive shaft (116) configured to wipe a windshield (104) of a vehicle (102) between the start position (110) and the end sweep position (112) to provide a viewing portion (114) of the windshield (104) in a defined sweep zone (108).

8. The system (100) of claim 7, further comprising the vehicle (102) having the windshield (104), the wiper arm (106) mounted to the vehicle (102).

9. The system (100) of claim 8, wherein the vehicle (102) is an aircraft and the windshield (104) is a cockpit windshield, wherein the viewing portion (114) of the windshield (104) is a pilot viewing portion and/or a copilot viewing portion.

10. The system (100) of any of claims 1 to 9, further comprising a bearing (158) disposed on the wiper drive shaft (116) forward of the nut (144) configured to facilitate rotation of the wiper drive shaft (116).

11. The system (100) of any of claims 1 to 10, wherein the wiper drive shaft (116) does not translate axially relative to the end cap (122) such that a distance between a distal end (134) of the wiper drive shaft (116) and the end cap (122) does not change as the wiper drive shaft (116) rotates and as the nut (144) moves axially relative to the end cap (122) and the wiper drive shaft (116).

12. A non-transitory computer readable medium having computer executable instructions stored therein, the computer executable instructions configured to cause a computer to perform a method, the method comprising: controlling movement of a wiper arm (104) based at least in part on a position of a nut (144) along external threads (132) of a wiper drive shaft (116) and between a first and second mechanical hard stop (160, 162) disposed on the wiper drive shaft (116) such that total displacement of the wiper arm (104) is confined to a predetermined sweep zone (108) defined by the first and second mechanical hard stops (160, 162); the medium further comprising a memory (168), the memory (168) configured to store a predefined coded wiper arm program, the predefined program configured to control a motor (124) to rotate a motor shaft (126) and the wiper drive shaft (116) a predetermined number of motor shaft (126) revolutions and wiper drive shaft (116) revolutions respectively to complete a sweep; and wherein the mechanical hard stops (160, 162) include a first circlip (160) and a second circlip (162) disposed on the wiper drive shaft (116) each at a respective first and second axial offset from the external threads (132) defining the sweep zone (108), the first and second circlips (160, 162) configured to trigger an overcurrent condition of a motor (124) driving the wiper drive shaft (116), wherein controlling movement of the wiper arm (104) includes: shutting down the motor (124) when the overcurrent condition is detected irrespective of whether the predetermined number of motor shaft (126) or wiper drive shaft (116) revolutions have occurred when the overcurrent condition is detected.

13. The medium of claim 12, wherein controlling movement of the wiper arm (106) includes: stopping movement of the wiper arm (106) when the nut (144) interacts with the first or second mechanical hard stop (160, 162) irrespective of whether the predetermined number of motor shaft (126) or wiper drive shaft (116) revolutions have occurred

## Patentansprüche

1. System (100), umfassend eine Scheibenwischerantriebswelle (116), konfiguriert, um einen Scheibenwischerarm (106) zwischen einer Startposition (110) und einer Endschwenkposition (112) anzutreiben, wobei die Scheibenwischerantriebswelle (116) Außengewinde (132) darin und an einem distalen Ende (134) davon beinhaltet, eine axiale Länge der Außengewinde (132) die Startposition (110) und die Endschwenkposition (112) und einen Gesamtschwenkwinkel zwischen der Startposition (110) und der Endschwenkposition (112) definiert, **dadurch gekennzeichnet, dass**
die Scheibenwischerantriebswelle (116) eine erste Festanschlagsrille (136) und eine zweite Festanschlagsrille (138) beinhaltet, die beide zu einem jeweiligen ersten axialen Versatz und einem zweiten axialen Versatz von den Außengewinden (132) definiert sind, um eine erste Festanschlagsposition (140) und eine zweite Festanschlagsposition (142) zu definieren; eine Mutter (144), die auf die Scheibenwischerantriebswelle (116) gewunden und konfiguriert ist, um sich axial entlang der Scheibenwischerantriebswelle (116) während einer Drehung der Scheibenwischerantriebswelle (116) innerhalb der Mutter (144) entlang zu bewegen, wobei die erste und zweite Festanschlagsposition (140, 142) axiale Begrenzungen der Mutter (144) derart definieren, dass sich die Mutter (144) axial entlang der Scheibenwischerantriebswelle (116) zwischen der ersten und zweiten Festanschlagsposition (140, 142) bewegt; und ein Abschlussstück (122), konfiguriert, um das distale Ende (134) der Scheibenwischerantriebswelle (116) zu umschließen, wobei das Abschlussstück (122) interne Kerbverzahnungen (154) beinhaltet, definiert auf einem Innendurchmesser (156) davon, konfiguriert, um mit externen Kerbverzahnungen (150) zusammenzupassen, die auf einem Außendurchmesser (152) der Mutter (144) definiert sind, um eine Drehung der Mutter (144) im Verhältnis zu der Scheibenwischerantriebswelle (116) und dem Abschlussstück (122) zu verhindern.

2. System (100) nach Anspruch 1, ferner umfassend einen ersten Sicherungsring (160), angeordnet in der ersten Festanschlagsrille (136) und einen zweiten Sicherungsring (162), angeordnet in der zweiten Festanschlagsrille (138), wobei der erste und zweite Sicherungsring (160, 162) konfiguriert sind, um eine axiale Bewegung der Mutter (144) entlang der Scheibenwischerantriebswelle (116) jenseits des ersten und zweiten Sicherungsrings (160, 162) zu verhindern, um zu verhindern, dass sich die Scheibenwischerantriebswelle (116) jenseits der Startposition (110) und der Endschwenkposition (112) dreht.

3. System (100) nach Anspruch 1 oder 2, ferner umfassend einen Motor (124), konfiguriert, um die Scheibenwischerantriebswelle (116) zum Oszillieren zwischen der Startposition (110) und der Endschwenkposition (112) anzutreiben.

4. System (100) nach Anspruch 3, ferner umfassend einen Controller (130), konfiguriert, um den Motor (124) zu steuern und aufweisend ein Überstrommodul (166), das betriebswirksam mit dem Motor (124) verbunden ist, konfiguriert, um einen Überstromzustand in dem Motor (124) zu erfassen.

5. System (100) nach Anspruch 4, wobei der erste und zweite Sicherungsring (160, 162) konfiguriert sind, um einen Überstromzustand in dem Motor (124) auszulösen, wenn die Mutter (144) entweder den ersten oder zweiten Sicherungsring (160, 162) kontaktiert, wobei das Überstrommodul (166) konfiguriert ist, um den Motor (124) zu veranlassen, abzuschalten, wenn der Überstrom festgestellt wird, um Überschwenken des Scheibenwischerarms (106) jenseits der Startposition (110) oder der Endschwenkposition (112) zu verhindern.

6. System (100) nach Anspruch 5, wobei der Controller (130) konfiguriert ist, um eine Bewegung des Scheibenwischerarms (106) und Abschalten des Motors (124) zu stoppen, wenn der Überstromzustand festgestellt wird, unabhängig davon, ob eine vorbestimmte Anzahl von Umdrehungen einer Motorwelle (126) oder Scheibenwischerantriebswellenumdrehungen aufgetreten ist, wie in Controlleranweisungen basierend auf einem codierten Scheibenwischerarmprogramm definiert.

7. System (100) nach einem der Ansprüche 1 bis 6, ferner umfassend den Scheibenwischerarm (106), betriebswirksam verbunden mit einem proximalen Ende (118) der Scheibenwischerantriebswelle (116), konfiguriert, um eine Windschutzscheibe (104) eines Fahrzeugs (102) zwischen der Startposition (110) und der Endschwenkposition (112) zu wischen, um einen Sichtabschnitt (114) der Windschutzscheibe (104) in einer definierten Schwenkzone (108) bereitzustellen.

8. System (100) nach Anspruch 7, ferner umfassend das Fahrzeug (102), aufweisend die Windschutzscheibe (104), wobei der Scheibenwischerarm (106) an dem Fahrzeug (102) montiert ist.

9. System (100) nach Anspruch 8, wobei das Fahrzeug (102) ein Luftfahrzeug ist und die Windschutzscheibe (104) eine Cockpitwindschutzscheibe ist, wobei der Sichtabschnitt (114) der Windschutzscheibe (104) ein Pilotsichtabschnitt und/oder ein Copilotsichtabschnitt ist.

10. System (100) nach einem der Ansprüche 1 bis 9, ferner umfassend ein an der Scheibenwischerantriebswelle (116) vor der Mutter (144) angeordnetes Lager (158), konfiguriert, um die Drehung der Scheibenwischerantriebswelle (116) zu erleichtern.

11. System (100) nach einem der Ansprüche 1 bis 10, wobei sich die Scheibenwischerantriebswelle (116) axial in Bezug auf das Abschlussstück (122) nicht verschiebt, sodass sich eine Entfernung zwischen einem distalen Ende (134) der Scheibenwischerantriebswelle (116) und dem Abschlussstück (122) nicht verändert, wenn sich die Scheibenwischerantriebswelle (116) dreht und wenn sich die Mutter (144) axial in Bezug auf das Abschlussstück (122) und die Scheibenwischerantriebswelle (116) bewegt.

12. Nichttransitorisches computerlesbares Medium, aufweisend darauf gespeicherte computerausführbare Anweisungen, wobei die computerausführbaren Anweisungen konfiguriert sind, um einen Computer zu veranlassen, ein Verfahren durchzuführen, wobei das Verfahren Folgendes umfasst: Steuern von Bewegung eines Scheibenwischerarms (104), mindestens teilweise basierend auf einer Position einer Mutter (144) entlang der Außengewinde (132) einer Scheibenwischerantriebswelle (116) und zwischen einem ersten und zweiten auf der Scheibenwischerantriebswelle (116) angeordneten mechanischen Festanschlag (160, 162), sodass eine Gesamtverschiebung des Scheibenwischerarms (104) auf eine durch den ersten und zweiten mechanischen Festanschlag (160, 162) definierte vorbestimmte Schwenkzone (108) begrenzt ist; wobei das Medium ferner einen Speicher (168) umfasst, der Speicher (168) konfiguriert ist, um ein vordefiniertes codiertes Scheibenwischerarmprogramm zu speichern, das vordefinierte Programm konfiguriert ist, um einen Motor (124) zu steuern, um eine Motorwelle (126) und die Scheibenwischerantriebswelle (116) um jeweils eine vorbestimmte Anzahl von Umdrehungen der Motorwelle (126) und Umdrehungen der Scheibenwischerantriebswelle (116) zu steuern, um eine Schwenkung zu vervollständigen; und wobei die mechanischen Festanschläge (160, 162) einen ersten Sicherungsring (160) und einen zweiten Sicherungsring (162) beinhalten, die auf der Scheibenwischerantriebswelle (116) angeordnet sind, beide zu einem jeweiligen ersten und zweiten axialen Versatz von den Außengewinden (132), die die Schwenkzone (108) definieren, wobei der erste und zweite Sicherungsring (160, 162) konfiguriert sind, um einen Überstromzustand eines die Scheibenwischerantriebswelle (116) antreibenden Motors (124) auszulösen, wobei Steuern der Bewegung des Scheibenwischerarms (104) beinhaltet: Abschalten des Motors (124), wenn der Überstromzustand festgestellt wird, unabhängig davon, ob die vorbestimmte Anzahl von Umdrehungen der Motorwelle (126) oder Scheibenwischerantriebswelle (116) aufgetreten ist, wenn der Überstromzustand festgestellt wird.

13. Medium nach Anspruch 12, wobei Steuern der Bewegung des Scheibenwischerarms (106) beinhaltet: Stoppen der Bewegung des Scheibenwischerarms (106), wenn die Mutter (144) mit dem ersten oder zweiten mechanischen Festanschlag (160, 162) interagiert, unabhängig davon, ob die vorbestimmte Anzahl von Umdrehungen der Motorwelle (126) oder Scheibenwischerantriebswelle (116) aufgetreten ist.

## Revendications

1. Système (100) comprenant un arbre d'entraînement d'essuie-glace (116) configuré pour entraîner un bras d'essuie-glace (106) entre une position de départ (110) et une position de fin de balayage (112), l'arbre d'entraînement d'essuie-glace (116) comportant des filetages externes (132) à l'intérieur de celui-ci et à une extrémité distale (134) de celui-ci, une longueur axiale des filetages externes (132) définissant la position de départ (110) et la position de fin de balayage (112), ainsi qu'un angle de balayage total entre la position de départ (110) et la position de fin de balayage (112), **caractérisé en ce que** : l'arbre d'entraînement d'essuie-glace (116) comporte une première rainure de butée (136) et une seconde rainure de butée (138), chacune définie au niveau d'un premier décalage axial et d'un second décalage axial respectifs par rapport aux filetages externes (132) pour définir une première position de butée (140) et une seconde position de butée (142) ; un écrou (144) fileté sur l'arbre d'entraînement d'essuie-glace (116) et configuré pour se déplacer axialement le long de l'arbre d'entraînement d'essuie-glace (116) pendant la rotation de l'arbre d'entraînement d'essuie-glace (116) à l'intérieur de l'écrou (144), dans lequel les première et seconde positions de butée (140, 142) définissent des limites axiales de l'écrou (144) de sorte que l'écrou (144) se déplace axialement le long de l'arbre d'entraînement d'essuie-glace (116) entre les première et seconde positions de butée (140, 142) ; et un capuchon d'extrémité (122) configuré pour contenir l'extrémité distale (134) de l'arbre d'entraînement d'essuie-glace (116), le capuchon d'extrémité (122) comportant des cannelures internes (154) définies sur un diamètre intérieur (156) de celui-ci configurées pour s'accoupler avec des cannelures externes (150) définies sur un diamètre extérieur (152) de l'écrou (144) pour empêcher la rotation de l'écrou (144) par rapport à l'arbre d'entraînement d'essuie-glace (116) et au capuchon d'extrémité (122).

2. Système (100) selon la revendication 1, comprenant en outre un premier circlip (160) disposé dans la première rainure de butée (136) et un second circlip (162) disposé dans la seconde rainure de butée (138), dans lequel les premier et second circlips (160, 162) sont configurés pour empêcher le mouvement axial de l'écrou (144) le long de l'arbre d'entraînement d'essuie-glace (116) au-delà des premier et second circlips (160, 162) afin d'empêcher l'arbre d'entraînement d'essuie-glace (116) de tourner au-delà de la position de départ (110) et de la position de fin de balayage (112).

3. Système (100) selon la revendication 1 ou 2, comprenant en outre un moteur (124) configuré pour entraîner l'arbre d'entraînement d'essuie-glace (116) afin qu'il oscille entre la position de départ (110) et la position de fin de balayage (112).

4. Système (100) selon la revendication 3, comprenant en outre un dispositif de commande (130) configuré pour commander le moteur (124) et ayant un module de surintensité (166) relié fonctionnellement au moteur (124) configuré pour détecter une condition de surintensité dans le moteur (124).

5. Système (100) selon la revendication 4, dans lequel les premier et second circlips (160, 162) sont configurés pour déclencher une condition de surintensité dans le moteur (124) lorsque l'écrou (144) entre en contact avec le premier ou le second circlip (160, 162), dans lequel le module de surintensité (166) est configuré pour provoquer l'arrêt du moteur (124) lorsque la surintensité est détectée afin d'empêcher que le balayage du bras d'essuie-glace (106) n'aille au-delà de la position de départ (110) ou de la position de fin de balayage (112).

6. Système (100) selon la revendication 5, dans lequel le dispositif de commande (130) est configuré pour arrêter le mouvement du bras d'essuie-glace (106) et arrêter le moteur (124) lorsque la condition de surintensité est détectée, qu'un nombre prédéterminé de tours de l'arbre moteur (126) ou de tours de l'arbre d'entraînement d'essuie-glace ait été atteint ou non, comme défini dans les instructions du dispositif de commande, sur la base d'un programme de bras d'essuie-glace codé.

7. Système (100) selon l'une quelconque des revendications 1 à 6, comprenant en outre le bras d'essuie-glace (106) relié fonctionnellement à une extrémité proximale (118) de l'arbre d'entraînement d'essuie-glace (116) configuré pour essuyer un pare-brise (104) d'un véhicule (102) entre la position de départ (110) et la position de fin de balayage (112) afin de fournir une partie de vision (114) du pare-brise (104) dans une zone de balayage (108) définie.

8. Système (100) selon la revendication 7, comprenant en outre le véhicule (102) ayant le pare-brise (104), le bras d'essuie-glace (106) monté sur le véhicule (102).

9. Système (100) selon la revendication 8, dans lequel le véhicule (102) est un aéronef et le pare-brise (104) est un pare-brise de cockpit, dans lequel la partie de vision (114) du pare-brise (104) est une partie de vision de pilote et/ou une partie de vision de copilote.

10. Système (100) selon l'une quelconque des revendications 1 à 9, comprenant en outre un palier (158) disposé sur l'arbre d'entraînement d'essuie-glace (116) en avant de l'écrou (144) configuré pour faciliter la rotation de l'arbre d'entraînement d'essuie-glace (116).

11. Système (100) selon l'une quelconque des revendications 1 à 10, dans lequel l'arbre d'entraînement d'essuie-glace (116) ne se déplace pas axialement par rapport au capuchon d'extrémité (122) de sorte qu'une distance entre une extrémité distale (134) de l'arbre d'entraînement d'essuie-glace (116) et le capuchon d'extrémité (122) ne change pas lorsque l'arbre d'entraînement d'essuie-glace (116) tourne et lorsque l'écrou (144) se déplace axialement par rapport au capuchon d'extrémité (122) et à l'arbre d'entraînement d'essuie-glace (116).

12. Support non transitoire lisible par ordinateur dans lequel sont stockées des instructions exécutables par ordinateur, les instructions exécutables par ordinateur étant configurées pour permettre à un ordinateur d'exécuter un procédé, le procédé comprenant : la commande du mouvement d'un bras d'essuie-glace (104) sur la base au moins en partie d'une position d'un écrou (144) le long de filetages externes (132) d'un arbre d'entraînement d'essuie-glace (116) et entre une première et une seconde butées mécaniques (160, 162) disposées sur l'arbre d'entraînement d'essuie-glace (116) de sorte que le déplacement total du bras d'essuie-glace (104) soit limité à une zone de balayage prédéterminée (108) définie par les première et seconde butées mécaniques (160, 162) ; le support comprenant en outre une mémoire (168), la mémoire (168) étant configurée pour stocker un programme de bras d'essuie-glace codé prédéfini, le programme prédéfini étant configuré pour commander un moteur (124) afin de faire tourner un arbre moteur (126) et l'arbre d'entraînement d'essuie-glace (116) selon un nombre prédéterminé de tours de l'arbre moteur (126) et de l'arbre d'entraînement d'essuie-glace (116) respectivement pour effectuer un balayage complet ; et dans lequel les butées mécaniques (160, 162) comportent un premier circlip (160) et un second circlip (162) disposés sur l'arbre d'entraînement d'essuie-glace (116), chacun selon un premier et un second décalage axial respectif par rapport aux filetages externes (132) définissant la zone de balayage (108), les premier et second circlips (160, 162) étant configurés pour déclencher une condition de surintensité d'un moteur (124) entraînant l'arbre d'entraînement d'essuie-glace (116), dans lequel la commande du mouvement du bras d'essuie-glace (104) comporte : l'arrêt du moteur (124) lorsque la condition de surintensité est détectée, que le nombre prédéterminé de tours de l'arbre moteur (126) ou de l'arbre d'entraînement d'essuie-glace (116) ait été atteint ou non lorsque la condition de surintensité est détectée.

13. Dispositif selon la revendication 12, dans lequel la commande du mouvement du bras d'essuie-glace (106) comporte : l'arrêt du mouvement du bras d'essuie-glace (106) lorsque l'écrou (144) entre en contact avec la première ou la seconde butée mécanique (160, 162), que le nombre prédéterminé de tours de l'arbre moteur (126) ou de l'arbre d'entraînement d'essuie-glace (116) ait été atteint ou non.
